# EUROPÄISCHE PATENTSCHRIFT

(11) **EP 3 760 867 B1**
(45) Veröffentlichungstag und Bekanntmachung des Hinweises auf die Patenterteilung: **04.09.2024**
(21) Anmeldenummer: 20183802.6
(22) Anmeldetag: 02.07.2020
(51) Int. Cl.: F04B 35/04, F04B 39/12, F04C 29/00

(54) **VERDICHTER-/EXPANDER-MASCHINE**
COMPRESSOR/EXPANDER MACHINE
MACHINE-COMPRESSEUR/DÉTENDEUR

(30) Priorität: 04.07.2019 DE 102019118138
(43) Veröffentlichungstag der Anmeldung: 06.01.2021
(73) Patentinhaber: BITZER Kühlmaschinenbau GmbH, 71065 Sindelfingen (DE)
(72) Erfinder: Dreilich, Benjamin, 06114 Halle (DE); Schramm, Steffen, 04229 Leipzig (DE)
(74) Vertreter: Hoeger, Stellrecht & Partner Patentanwälte mbB

(56) Entgegenhaltungen:
- EP-A1- 1 870 599
- EP-A1- 1 970 568
- EP-A1- 2 894 333
- DE-T5- 112013 000 628
- DE-T5- 112017 003 154
- JP-A- 2003 111 347
- JP-A- 2003 129 983
- KR-A- 20160 055 638

## Beschreibung

Die Erfindung betrifft eine Verdichter-/Expander-Maschine mit einem Gehäuse, in welchem eine Verdichter-/Expander-Einheit für ein Medium angeordnet ist, welches in mindestens einem Innenraum des Gehäuses geführt ist, und mit einer am Gehäuse angeordneten elektrischen Verbindungseinheit, mindestens umfassend eine an dem Gehäuse angeordnete, in den mindestens einen Innenraum führende elektrische Durchführung zur Herstellung einer elektrischen Verbindung mit einer im Gehäuse angeordneten elektrischen Einheit, wobei die elektrische Durchführung einen an dem Gehäuse als separates Element montierten Montagekörper sowie in diesem sitzende elektrische Kontaktelemente aufweist, wobei der Montagekörper eine um die elektrischen Kontaktelemente geschlossen umlaufende, dem mindestens einen Innenraum abgewandte erste Montagekörperdichtfläche aufweist, welche quer zu einer von dem in dem mindestens einen Innenraum unter Druck stehenden Medium auf die Durchführung wirkenden Druckkraft verläuft und welche mit einer dem mindestens einen Innenraum sowie dieser ersten Montagekörperdichtfläche zugewandten ersten Gehäusedichtfläche des Gehäuses dichtend zusammenwirkt, wobei zwischen der ersten Montagekörperdichtfläche und der ersten Gehäusedichtfläche ein erstes Dichtelement angeordnet ist, und wobei der Montagekörper durch mindestens ein Halteelement am Gehäuse fixiert ist, welches den Montagekörper so hält, dass die erste Montagekörperdichtfläche relativ zur ersten Gehäusedichtfläche in einer abdichtenden Stellung steht. Derartige Verdichter-/Expander-Maschinen sind aus der JP 2003-129983 A oder der EP 1 870 599 A1 bekannt.

Der Erfindung liegt daher die Aufgabe zugrunde, eine einfachere Lösung zu finden.

Diese Aufgabe wird bei einer Verdichter-/Expander-Maschine der eingangs beschriebenen Art erfindungsgemäß dadurch gelöst, dass der Montagekörper eine zweite Montagekörperdichtfläche aufweist, welche um die Gesamtheit der elektrischen Kontaktelemente geschlossen umlaufend und quer zur ersten Montagekörperdichtfläche verläuft und dass das Gehäuse eine zweite Gehäusedichtfläche aufweist, die quer zur ersten Gehäusedichtfläche verläuft und mit der zweiten Montagekörperdichtfläche abdichtend zusammenwirkt, dass die zweite Montagekörperdichtfläche und die zweite Gehäusedichtfläche auf einer dem mindestens einen Innenraum zugewandten Seite der ersten Montagekörperdichtfläche und der ersten Gehäusedichtfläche zusammenwirkend angeordnet sind, und dass zwischen der zweiten Montagekörperdichtfläche und der zweiten Gehäusedichtfläche ein zweites Dichtelement, insbesondere ein Dichtring, angeordnet ist.

Der Vorteil der erfindungsgemäßen Lösung ist darin zu sehen, dass damit die Möglichkeit besteht, bei Einsatz eines an dem Gehäuse als separates Element montierten Montagekörpers unter Ausnutzung der Druckkraft im Innenraum eine zuverlässige Abdichtung zwischen dem Montagekörper und dem Gehäuse zu realisieren, wobei durch den Verlauf der ersten Montagekörperdichtfläche quer zu der Druckkraft, das heißt schräg oder senkrecht zu der Druckkraft, die Druckkraft zur Abdichtung ausgenutzt werden kann.

Besonders vorteilhaft ist es dabei, wenn das mindestens eine Halteelement eine Bewegung der ersten Montagekörperdichtfläche in Richtung der ersten Gehäusedichtfläche zulässt.

Dadurch besteht die Möglichkeit, dass die durch das unter Druck im Innenraum stehende Medium auf die elektrische Durchführung wirkende Druckkraft ausgenutzt werden kann, um die Abdichtung zwischen der Montagekörperdichtfläche und der Gehäusedichtfläche in optimaler Weise zu realisieren.

Konstruktiv besonders vorteilhaft ist es, wenn die Montagekörperdichtfläche an einem die elektrischen Kontaktelemente umgebenden Flanschkörper des Montagekörpers angeordnet ist und somit um den Montagekörper umläuft.

Ferner ist es vorteilhaft, wenn zwischen der ersten Montagekörperdichtfläche und der ersten Gehäusedichtfläche ein erstes Dichtelement eingespannt, ist, um die optimale Abdichtung zwischen der Montagekörperdichtfläche und der Gehäusedichtfläche zu gewährleisten.

Insbesondere ist hierbei vorgesehen, dass sowohl die erste Montagekörperdichtfläche als auch die erste Gehäusedichtfläche jeweils an dem ersten Dichtelement dichtend anliegen, was insbesondere dann der Fall ist, wenn unter Wirkung der auf die Durchführung wirkenden Druckkraft der Montagekörper mit der Montagekörperdichtfläche das Dichtelement kraftbeaufschlagt und dieses dadurch seinerseits wiederum kraftbeaufschlagt an die erste Gehäusedichtfläche anliegend gehalten wird.

Die erfindungsgemäße Ausführung sieht vor, dass der Montagekörper eine zweite Montagekörperdichtfläche aufweist, welche um die Gesamtheit der elektrischen Kontaktelemente geschlossen umlaufend und quer, das heißt schräg oder senkrecht, zur ersten Montagekörperdichtfläche verläuft und dass das Gehäuse eine zweite Gehäusedichtfläche aufweist, die quer, das heißt schräg oder senkrecht, zur ersten Gehäusedichtfläche verläuft und mit der zweiten Montagekörperdichtfläche abdichtend zusammenwirkt.

Eine derartige zweite Montagekörperdichtfläche zusammenwirkend mit einer zweiten Gehäusedichtfläche schafft die Möglichkeit, zusätzlich zur ersten Montagekörperdichtfläche und zur ersten Gehäusedichtfläche eine weitere Abdichtstelle zu schaffen.

Erfindungsgemäße ist ferner vorgesehen, dass die zweite Montagekörperdichtfläche und die zweite Gehäusedichtfläche auf einer dem mindestens einen Innenraum zugewandten Seite der ersten Montagekörperdichtfläche und der ersten Gehäusedichtfläche zusammenwirkend angeordnet sind, so dass dadurch insbesondere bei keinem oder niedrigem Absolutdruck des Mediums im Innenraum zunächst eine Abdichtung durch die zweite Montagekörperdichtfläche und die zweite Gehäusedichtfläche erfolgt, die einen Druckaufbau zulässt, der sich nachfolgend dann vorteilhaft auf die Abdichtung zwischen der ersten Montagekörperdichtfläche und der ersten Gehäusedichtfläche auswirkt.

Besonders günstig ist es dabei, wenn die zweite Montagekörperdichtfläche und die zweite Gehäusedichtfläche so ausgerichtet sind, dass der Montagekörper mit der ersten Montagekörperdichtfläche in Richtung der ersten Gehäusedichtfläche, insbesondere unter Beaufschlagung des ersten Dichtelements, bewegbar ist, so dass durch die zweite Montagekörperdichtfläche und die zweite Gehäusedichtfläche die Ausnutzung der Druckkraft zur Schaffung einer optimalen Abdichtung zwischen der ersten Montagekörperdichtfläche und der ersten Gehäusedichtfläche nicht beeinträchtigt wird.

Hierzu ist vorzugsweise vorgesehen, dass die erste Montagekörperdichtfläche und die zweite Montagekörperdichtfläche ungefähr quer, vorzugsweise senkrecht, zueinander verlaufen, so dass die Abdichtung zwischen der zweiten Montagekörperdichtfläche und der zweiten Gehäusedichtfläche unabhängig ist von der Bewegbarkeit des Montagekörpers zur Ausbildung einer optimalen Abdichtung zwischen der ersten Montagekörperdichtfläche und der ersten Gehäusedichtfläche.

Um auch die Abdichtung zwischen der zweiten Montagekörperdichtfläche und der zweiten Gehäusedichtfläche zu optimieren ist erfindungsgemäß vorgesehen, dass zwischen diesen ein zweites Dichtelement, insbesondere ein Dichtring, vorgesehen ist, der zur Abdichtung zwischen der zweiten Montagekörperdichtfläche und der zweiten Gehäusedichtfläche beiträgt.

Ferner ist vorzugsweise vorgesehen, dass die zweite Montagekörperdichtfläche und die zweite Gehäusedichtfläche gegebenenfalls unter Mitwirkung des zweiten Dichtelements derart zusammenwirken, dass eine Führung des Montagekörpers in einer Führungsrichtung erfolgt, die quer, vorzugsweise senkrecht zur ersten Montagekörperdichtfläche und ersten Gehäusedichtfläche verläuft.

Insbesondere ist in diesem Fall vorgesehen, dass die zweite Montagekörperdichtfläche und die zweite Gehäusedichtfläche parallel zueinander verlaufen.

Um die elektrische Durchführung möglichst exakt relativ zum Gehäuse positionieren zu können, ist vorzugsweise vorgesehen, dass der Montagekörper mit einer ersten Aufnahmefläche versehen ist, welche mit einer zweiten, am Gehäuse angeordneten Aufnahmefläche zusammenwirkt.

Dabei dienen die erste Aufnahmefläche und die zweite Aufnahmefläche dazu, eine möglichst exakte Positionierung des Montagekörpers relativ zur ersten Montagekörperdichtfläche und ersten Gehäusedichtfläche zu erreichen.

Insbesondere sind die erste Aufnahmefläche und die zweite Aufnahmefläche so ausgebildet, dass sie auch eine Verdrehung der elektrischen Durchführung relativ zum Gehäuse zu verhindern, um somit die elektrische Durchführung verdrehfest am Gehäuse festzulegen.

Um ebenfalls die Abdichtwirkung zwischen der ersten Montagekörperdichtfläche und der ersten Gehäusedichtfläche nicht zu behindern ist vorzugsweise vorgesehen, dass die erste Aufnahmefläche und die zweite Aufnahmefläche so verlaufen, dass der Montagekörper mit der ersten Montagekörperdichtfläche in Richtung der ersten Gehäusedichtfläche, insbesondere unter Beaufschlagung des ersten Dichtelements, bewegbar ist.

In diesem Fall lässt sich auch durch die erste Aufnahmefläche und die zweite Aufnahmefläche alternativ und/oder ergänzend zur Wirkung der zweiten Montagekörperdichtfläche und der zweiten Gehäusedichtfläche eine Führung des Montagekörpers relativ zum Gehäuse in einer Führungsrichtung erreichen.

Insbesondere ist hierbei vorgesehen, dass die erste und die zweite Aufnahmefläche quer zur ersten Montagekörperdichtfläche und quer zur ersten Gehäusedichtfläche, vorzugsweise senkrecht zu diesen, verlaufen.

Darüber hinaus ist vorgesehen, dass die erste Aufnahmefläche und die zweite Aufnahmefläche einen Formschluss bilden, welcher die elektrische Durchführung relativ zum Gehäuse drehfest fixiert, vorzugsweise in einer einzigen Drehstellung relativ zum Gehäuse drehfest fixiert.

Besonders günstig ist es ferner, wenn die erste Aufnahmefläche und die zweite Aufnahmefläche auf einer dem mindestens einen Innenraum abgewandten Seite der ersten Montagekörperdichtfläche und der ersten Gehäusedichtfläche angeordnet sind, so dass diese keinerlei Wirkung im Zusammenhang mit der Abdichtung zwischen dem Gehäuse und dem Montagekörper entfalten.

Hinsichtlich der Anordnung der elektrischen Durchführung am Gehäuse wurden bislang keine weiteren Angaben gemacht.

So kann die elektrische Durchführung grundsätzlich an jeder Stelle des Gehäuses, vorzugsweise jedoch an einem für die Aufnahme der elektrischen Maschine vorgesehenen Gehäuseabschnitt, angeordnet sein.

Besonders günstig ist es, wenn die elektrische Durchführung an einem am Gehäuse montierbaren Element desselben, insbesondere an einem nach der Montage der elektrischen Maschine montierbaren Element des Gehäuses, angeordnet ist, so dass eine Verdrahtung der elektrischen Durchfühung nach einer Montage der elektrischen Maschine möglich ist, die dadurch einfacher und sicherer erfolgen kann.

Eine vorteilhafte Lösung sieht vor, dass die elektrische Durchführung an einem montierbaren Element des Gehäuses, beispielsweise einem Deckel des Gehäuses, insbesondere an einem der Verdichter-/Expansionseinheit gegenüberliegend am Gehäuse vorgesehenen Element, angeordnet ist.

Dabei ist das Element vorzugsweise an dem die elektrische Maschine aufnehmenden Gehäuseabschnitt vorgesehen.

Hinsichtlich der Ausbildung der elektrischen Verbindungseinheit wurden im Zusammenhang mit der bisherigen Beschreibung der einzelnen Lösungen keine näheren Angaben gemacht.

Eine besonders vorteilhafte Lösung sieht vor, dass die elektrische Verbindungseinheit einen mit der elektrischen Durchführung verbindbaren oder verbundenen Steckanschluss aufweist.

Ein derartiger Steckanschluss erlaubt es in besonders einfacher Weise, eine lösbare Verbindung mit der elektrischen Durchführung herzustellen.

Insbesondere ist hierbei vorzugsweise vorgesehen, dass der Steckanschluss mit den Kontaktelementen der elektrischen Durchführung verbindbare Steckverbinderelemente aufweist.

Ferner ist vorzugsweise vorgesehen, dass der Steckanschluss ein Erdungssteckverbinderelement aufweist, welches mit einem gehäuseseitigen Erdungskontaktelement verbindbar oder verbunden ist.

Ein derartiges Erdungssteckverbinderelement in Verbindung mit einem gehäuseseitigen Erdungskontaktelement schafft die Möglichkeit, in einfacher Weise einen Erdungskontakt mit dem Gehäuse der Verdichter-/Expander-Maschine herzustellen.

Prinzipiell könnte das gehäuseseitige Erdungskontaktelement ausgeführt sein wie ein Kontaktelement der elektrischen Durchführung und dabei könnte beispielsweise in dem Innenraum des Gehäuses eine Verbindung zwischen dem Gehäuse und dem Erdungskontaktelement hergestellt sein.

Eine besonders einfache und vorteilhafte Lösung sieht vor, dass das gehäuseseitige Erdungskontaktelement neben der elektrischen Durchführung am Gehäuse angeordnet ist, so dass sich das Kontaktelement unmittelbar in elektrisch leitender Verbindung mit dem Gehäuse realisieren lässt, ohne hierzu ein Kontaktelement der elektrischen Durchführung erforderlich zu machen.

Insbesondere kann in diesem Fall das gehäuseseitige Erdungskontaktelement dann, wenn es mit dem entsprechenden Erdungssteckverbinderelement verbunden ist, dazu dienen, eine eindeutige Ausrichtung des Steckanschlusses relativ zur elektrischen Durchführung vorzugeben, und dadurch beispielsweise Fehlkontaktierungen der elektrischen Durchführung zu vermeiden.

Eine vorteilhafte Lösung sieht ferner vor, dass der Steckanschluss ein Steckanschlussgehäuse aufweist, welches mit dem Gehäuse verbindbar oder verbunden ist, um dadurch auch den Steckanschluss selbst relativ zum Gehäuse definiert und dauerhaft zu positionieren.

Insbesondere ist hierbei vorgesehen, dass zwischen dem Steckanschlussgehäuse und dem Gehäuse eine Abdichtung vorgesehen ist, welche es erlaubt, einen die Steckverbinderelemente aufnehmenden Raum des Steckanschlussgehäuses gegen äußeren Einflüsse, insbesondere auch Feuchtigkeit, zu schützen.

Ferner ist vorzugsweise vorgesehen, dass das Steckanschlussgehäuse mindestens eine erste Formschlussfläche aufweist, welcher zur Positionierung des Steckanschlussgehäuses relativ zum Gehäuse mit einer zweiten, am Gehäuse angeordneten Formschlussfläche zusammenwirkt.

Besonders günstig ist es, wenn hierbei die erste Formschlussfläche und die zweite Formschlussfläche eine verdrehfeste Formschlussverbindung bewirken. Hinsichtlich des Antriebs der Verdichter-/Expander-Einheit wurden bislang keine näheren Angaben gemacht.

Beispielsweise könnte die elektrische Maschine außerhalb des Gehäuses angeordnet sein.

So sieht eine vorteilhafte Lösung vor, dass in dem Gehäuse eine mit der Verdichter-/Expander-Einheit mechanisch gekoppelte elektrische Maschine als elektrische Einheit angeordnet ist.

Ferner ist vorzugsweise vorgesehen, dass in dem Gehäuse mindestens ein elektrischer Sensor als elektrische Einheit angeordnet ist.

Weitere Merkmale und Vorteile der Erfindung sind Gegenstand der nachfolgenden Beschreibung sowie der zeichnerischen Darstellung einiger Ausführungsbeispiele.

In den Zeichnungen zeigen:
- Fig. 1: einen Längsschnitt durch ein erstes Ausführungsbeispiel einer erfindungsgemäßen Verdichter-/Expander-Maschine;
- Fig. 2: eine vergrößerte Darstellung des Bereichs A in Fig. 1;
- Fig. 3: einen Längsschnitt durch ein zweites Ausführungsbeispiel einer erfindungsgemäßen Verdichter-/Expandereinheit und
- Fig. 4: eine vergrößerte Darstellung des Bereichs B in Fig. 3.

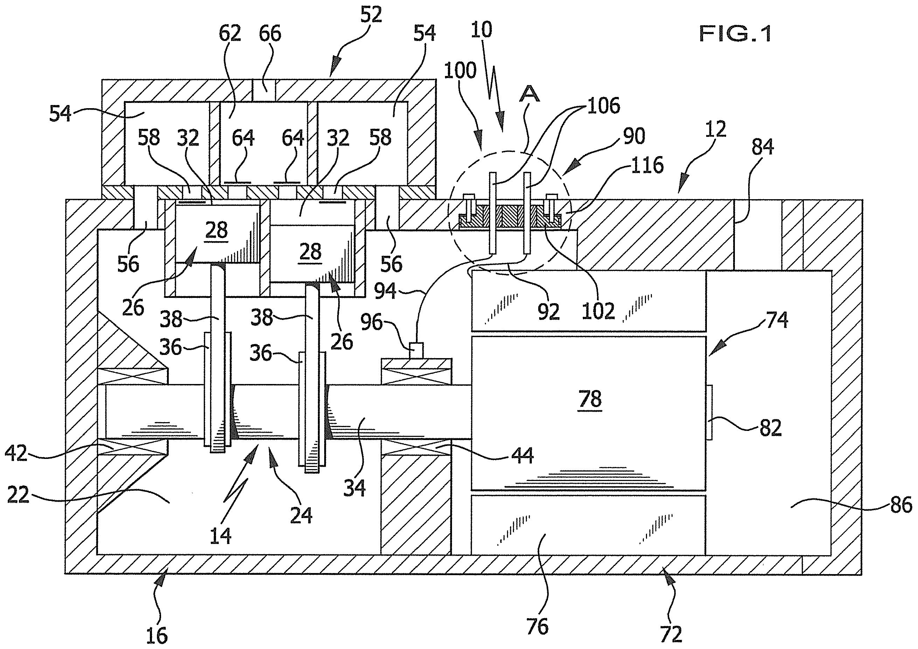

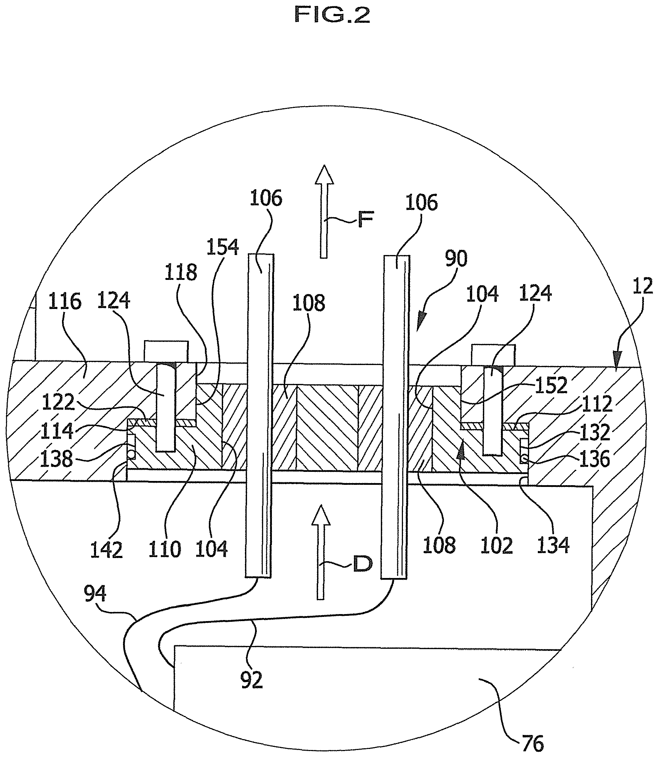

Ein in Fig. 1 und 2 dargestelltes erstes Ausführungsbeispiel einer Verdichter-/Expandermaschine 10 umfasst ein Gehäuse 12, in welchem eine Verdichter-/Expandereinheit 14 angeordnet ist, welche beispielhaft bei dem ersten Ausführungsbeispiel als Kolbenmaschine ausgebildet und in einem Gehäuseabschnitt 16 des Gehäuses 12 angeordnet ist.

Der Gehäuseabschnitt 16 umschließt dabei einen Innenraum 22, in welchem ein Kolbenantrieb 24 der Verdichter-/Expandereinheit 14 angeordnet ist, der mit in Zylindern 26 oszillierend bewegbaren Kolben 28 gekoppelt ist, so dass entweder ein in Zylinderkammern 32 der einzelnen Zylinder 26 angeordnetes Medium komprimiert oder expandiert werden kann, wobei durch den Kolbenantrieb 24 entweder die Kolben 28 zum Verdichten des Mediums angetrieben oder die Kolben 28 den Kolbenantrieb 24 beim Expandieren des Mediums antreiben.

Der Kolbenantrieb 24 umfasst beispielsweise eine Exzenterwelle 34 mit auf dieser angeordneten Exzentern 36, die über Kolbenstangen 38 mit den jeweiligen Kolben 28 gekoppelt sind. Ferner ist die Exzenterwelle 34 in dem Gehäuseabschnitt 16 drehbar gelagert.

Zum Abschluss der Zylinder 26 umfasst der Gehäuseabschnitt 16 noch einen Zylinderkopf 52 angeordnet, in welchem Einlasskammern 54 vorgesehen sind, in welche das der Verdichter-/Expandereinheit 14 zugeführte Medium über vom Innenraum 22 in die Einlasskammern 54 führende Einlasskanäle 56 eintritt und aus welchen das Medium über Einlassventile 58 in die Zylinderkammern 32 eintritt.

Ferner ist in dem Zylinderkopf 52 beispielsweise mindestens eine Auslasskammer 62 vorgesehen, in welche das die Zylinderkammern 32 verlassende Medium über Auslassventile 64 eintritt und welche das Medium über einen Auslasskanal 66 verlässt.

Das Gehäuse 12 umfasst ferner einen Gehäuseabschnitt 72, in welchem eine als Ganzes mit 74 bezeichnete elektrische Maschine angeordnet ist, welche einen Stator 76 und einen Rotor 78 aufweist, wobei der Rotor 78 auf einem Wellenabschnitt 82 der Exzenterwelle angeordnet ist und somit insbesondere mechanisch starr mit dem Kolbenantrieb 24 gekoppelt ist.

Bei dem ersten Ausführungsbeispiel der erfindungsgemäßen Verdichter-/Expandermaschine ist der Gehäuseabschnitt 72 mit einer Einlassöffnung 84 für das eintretende Medium versehen, welche auf einer dem Kolbenantrieb 24 abgewandten Seite der elektrischen Maschine 74 im Gehäuseabschnitt 72 angeordnet ist, so dass das durch die Einlassöffnung 84 eintretende Medium in einen die elektrische Maschine 74 aufnehmenden Innenraum 86 des Gehäuseabschnitts 72 eintritt, dann den Stator 76 und den Rotor 78 umströmt und kühlt, dann in den Innenraum 22 eintritt und von diesem über die Einlasskanäle 56 in die Einlasskammern 54 eintritt.

Dadurch ist sowohl der die elektrische Maschine 74 aufweisende Innenraum 86 als auch der Innenraum 22 zur Aufnahme des Kolbenantriebs 24 mit dem Druck des Mediums beaufschlagt, das in die Verdichter-/Expandereinheit 14 einströmt.

Im Fall des Betriebs der Verdichter-/Expandereinheit 14 als Verdichtereinheit, insbesondere mit COz als Arbeitsmedium, stehen die Innenräume 86 und 22 unter hohem Druck, beispielsweise unter einem Absolutdruck von ungefähr 10 bar - insbesondere im Stillstand - und bis 120 bar - beispielsweise im Betrieb -.

Im Fall des Betriebs der Verdichter-/Expandereinheit 14 als Expandereinheit stehen die Innenräume 86 und 22 unter vergleichbaren Absolutdruck des Arbeitsmediums.

Ferner ist das Gehäuse mit einer elektrischen Durchführung 90 versehen, welche einerseits dazu dient elektrische Anschlussleitungen 92 der elektrischen Maschine 74 aus dem Gehäuse 12 herauszuführen und/oder dazu dient, eine elektrische Verbindungsleitung 94 zu Sensoren und/oder Aktoren 96 in den Innenräumen 86 und/oder 22 herzustellen.

Insbesondere ist die elektrische Durchführung von einer elektrischen Verbindungseinheit 100 umfasst, wie beispielsweise nachfolgend im Zusammenhang mit dem zweiten Ausführungsbeispiel offenbart.

Die Sensoren und/oder Aktoren können beispielsweise Temperatursensoren 96 oder Schaltelemente sein, die in den Innenräumen 86 und/oder 22 angeordnet sind.

Wie in Fig. 1 und in Fig. 2 vergrößert dargestellt, umfasst die elektrische Durchführung 90 einen Montagekörper 102, welcher Durchlässe 104 aufweist, durch welche Kontaktelemente 106 hindurchgeführt sind, die ihrerseits von in den Durchlässen 104 sitzenden Glaskörpern 108 umschlossen sind, wobei die Glaskörper 108 die Kontaktelemente 106 einerseits relativ zum Montagekörper 102 fixieren und andererseits relativ zum Montagekörper 102 elektrisch isolieren, so dass beispielsweise die elektrischen Leitungen 92 und 94 mittels der Kontaktelemente 106 der elektrischen Durchführung 90 aus dem Gehäuse 12 herausgeführt werden können.

Die elektrische Durchführung 90 ist dabei als separates Bauteil in dem Gehäuse 12 montiert und ist daher relativ zum Gehäuse 12 abzudichten, um ein Austreten des zu der Verdichter-/Expandereinheit 10 geführten Mediums zu verhindern.

Hierzu umfasst der Montagekörper 102 einen um sämtliche Kontaktelemente 106, insbesondere auch die sämtliche Kontaktelemente 106 aufnehmenden Durchlässe 104, herum geschlossen umlaufenden Flanschkörper 110 mit einer ersten Montagekörperdichtfläche 112, welche quer zu einer Druckkraft D verläuft, mit welcher das in den Innenräumen 86 und/oder 22 angeordnete unter Druck stehende Medium auf die elektrische Durchführung 90, insbesondere dem Montagekörper 102 derselben wirkt, wobei die erste Montagekörperdichtfläche 112 dem jeweiligen, an die elektrische Durchführung 90 angrenzenden Innenraum 86 oder 22 abgewandt ist.

Somit ist die erste Montagekörperdichtfläche 112 einer ersten Gehäusedichtfläche 114 zugewandt, welche ihrerseits an einer Gehäusewand 116 angeordnet ist und insbesondere einen in der Gehäusewand 116 vorgesehenen Durchlass 118 für die Kontaktelemente 106 umschließend ausgebildet ist.

Ferner wird ein zwischen der ersten Montagekörperdichtfläche 112 und der ersten Gehäusedichtfläche 114 liegende Dichtelement 122 zwischen der ersten Montagekörperdichtfläche 112 und des ersten Gehäusedichtfläche 114 eingespannt und dichtet somit einerseits sowohl zur Montagekörperdichtfläche 112 als auch zur ersten Gehäusedichtfläche 114 vorzugsweise flächig ab, wobei insbesondere die Druckkraft D, ausgeübt durch das in dem jeweiligen Innenraum 86 beziehungsweise 22 angeordnete Medium, die Abdichtung zwischen der ersten Montagekörperdichtfläche 112, der ersten Gehäusedichtfläche 114 und dem ersten Dichtelement 122 unterstützt, sofern der Montagekörper 102 sich in Richtung der ersten Gehäusedichtfläche 114 in dem Maß, in dem sich das erste Dichtelement 122 setzt, bewegen kann.

Dies ist dadurch möglich, dass der Montagekörper 102 durch Halteelemente 124, beispielsweise die Gehäusewand 116 durchsetzende Schrauben, derart gehalten ist, dass die erste Montagekörperdichtfläche 112 und die erste Gehäusedichtfläche 114 an dem ersten Dichtelement 122 zumindest anliegen, insbesondere dieses zwischen sich einspannen, wobei allerdings diese Halteelemente 124 noch zusätzlich eine Bewegung des Montagekörpers 102 mit der ersten Montagekörperdichtfläche 112 in Richtung der ersten Gehäusedichtfläche 114 zulassen, so dass die elektrische Durchführung aufgrund der Beaufschlagung durch die Druckkraft D in der Art eines Kolbens mit der ersten Montagekörperdichtfläche 112 auf das erste Dichtelement 122 wirkt.

Um auch bei niedrigen Drucken und somit bei Beaufschlagung der elektrischen Durchführung 90 mittels einer niedrigen Druckkraft D, insbesondere bei nachfolgend ansteigender Druckkraft D oder gegebenenfalls keiner oder negativer Druckkraft D eine Undichtigkeit im Bereich des ersten Dichtelements 122 zu vermeiden, ist der Montagekörper 102 mit einer zweiten Montagekörperdichtfläche 132 versehen, welche auf einer dem jeweiligen Innenraum 86 beziehungsweise 22 zugewandten Seite der ersten Montagekörperdichtfläche 112 am Montagekörper 102 angeordnet ist und mit einer zweiten Gehäusekörperdichtfläche 134 zusammenwirkt, wobei zwischen der zweiten Montagekörperdichtfläche 132 und der zweiten Gehäusedichtfläche 134 ein zweites Dichtelement 136 angeordnet ist, welches einerseits an der zweiten Montagekörperdichtfläche 132 und andererseits an der zweiten Gehäusedichtfläche 134 dichtend anliegt.

Dabei liegt auch die zweite Gehäusedichtfläche 134 auf einer dem jeweiligen Innenraum 86 beziehungsweise 22 zugewandten Seite der ersten Gehäusedichtfläche 114.

Ferner sind die zweite Montagekörperdichtfläche 132 und die zweite Gehäusedichtfläche 134 so angeordnet, dass sie eine Bewegung des Montagekörpers 102 in Richtung der Druckkraft D zulassen, um die bereits beschriebene Beaufschlagung des ersten Dichtelements 122 durch die erste Montagekörperdichtfläche 112 nicht zu stören.

Vorzugsweise erstrecken sich die zweite Montagekörperdichtfläche 132 und die zweite Gehäusedichtfläche 134 parallel zueinander.

Ferner ist das zweite Dichtelement 136 vorzugsweise als O-Ring ausgebildet, wobei zur Sicherung der Lage des zweiten Dichtelements die zweite Montagekörperdichtfläche 132 einen Nutgrund einer Aufnahmenut 138 bildet, in welcher das als O-Ring ausgebildete zweite Dichtelement 136 aufgenommen ist.

Vorzugsweise ist ferner der Montagekörper 102 noch auf einer Seite oder beiderseits der Aufnahmenut 138 mit Führungsflächen 142 versehen, mit denen der Montagekörper 102 an der zweiten Gehäusedichtfläche 134 geführt ist, welche sich vorzugsweise seitlich über die Aufnahmenut 138 hinaus erstreckt.

Bei einer bevorzugten Lösung verläuft die zweite Gehäusedichtfläche 134 als zylindrische Fläche parallel zu einer Führungsrichtung F, in welcher die elektrische Durchführung 90 zur Beaufschlagung des ersten Dichtelements 122 mittels der Druckkraft D bewegbar ist.

Alternativ oder ergänzend zur Führung des Montagekörpers 102 durch die zweite Gehäusedichtfläche 134 ist der Montagekörper 102 auch durch den in der Gehäusewand 116 vorgesehenen Durchlass 118 geführt, wobei der Montagekörper 102 mit einer ersten Aufnahmefläche 152 an einer durch den Durchlass 118 gebildeten zweiten Aufnahmefläche 154 anliegt und wobei die Aufnahmeflächen 152 und 154 vorzugsweise parallel zur Führungsrichtung F und somit quer, vorzugsweise senkrecht zu der ersten Montagekörperdichtfläche 112 und der ersten Gehäusedichtfläche 114 verlaufen.

Sofern die Aufnahmeflächen 152 und 154 nicht-rotationssymmetrisch zur Führungsrichtung F verlaufen können diese dazu dienen, die Druckführung drehfest gegen Drehungen um die Führungsrichtung F, sowie bei geeigneter Formgebung in nur einer eindeutigen Drehstellung bezüglich der Führungsrichtung F, festzulegen.

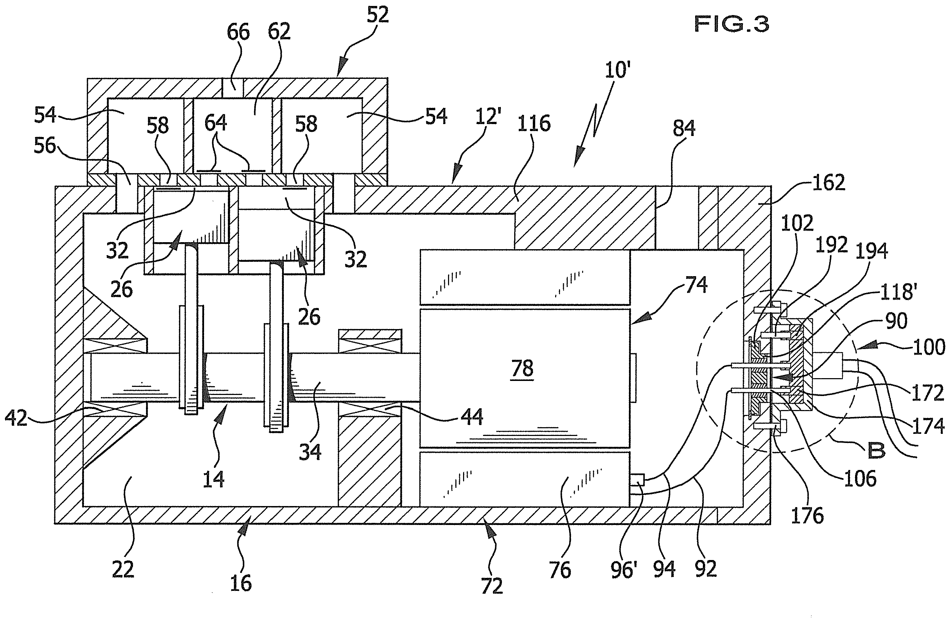

Bei einem zweiten Ausführungsbeispiel einer erfindungsgemäßen Verdichter-/Expandermaschine 10', dargestellt in Fig. 3, ist die Gehäusedurchführung 90 nicht in der seitlichen Gehäusewand 116 angeordnet, sondern sitzt in einem Durchlass 118', welcher in einem nach der elektrischen Maschine 74 am Gehäuse 12' montierbaren Element, beispielsweise einem stirnseitigen Gehäusedeckel 162 des Gehäuses 12' angeordnet ist, so dass eine Verdrahtung der Gehäusedurchführung 90 mit der bereits im Gehäuse 12' montierten elektrischen Maschine 74 erfolgen kann.

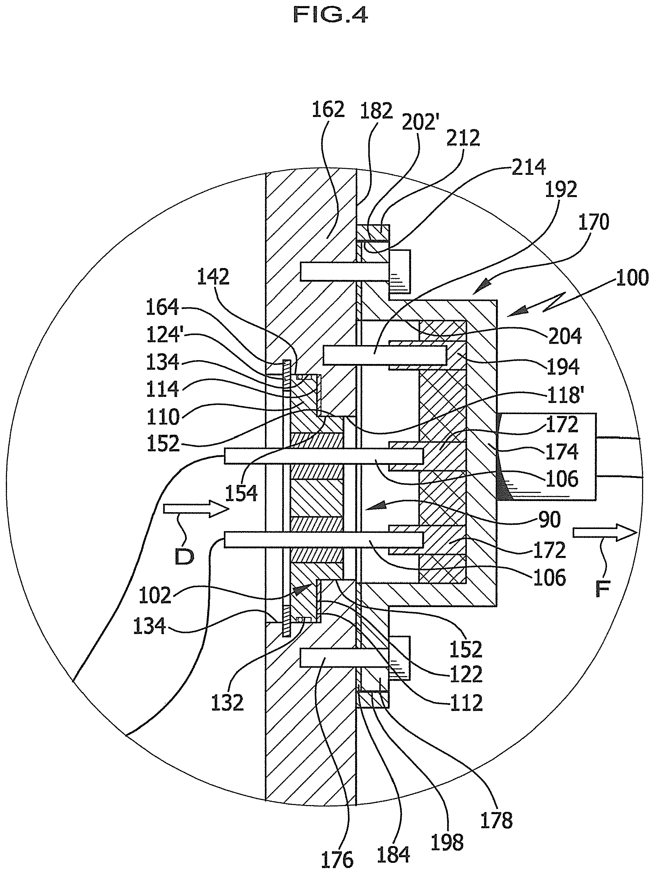

Dabei ist, wie in Fig. 4 dargestellt, der Montagekörper 102 mit der ersten Montagekörperdichtfläche 112 und der zweiten Montagekörperdichtfläche 132 sowie der Führungsfläche 142 in gleicher Weise ausgebildet wie beim ersten Ausführungsbeispiel und außerdem ist der Durchlass 118' im Gehäusedeckel 122 in gleicher Weise gestaltet wie beim ersten Ausführungsbeispiel, so dass dieser die erste Gehäusedichtfläche 114 und die zweite Gehäusedichtfläche 134 sowie die Führungsfläche 144 aufweist, die ebenfalls in gleicher Weise wirksam und ausgebildet sind, wie beim ersten Ausführungsbeispiel.

Darüber hinaus sind auch die Kontaktelemente 106 in gleicher Weise wie beim ersten Ausführungsbeispiel an dem Montagekörper 102 gehalten.

Im Gegensatz zum ersten Ausführungsbeispiel ist als Halteelement 124' ein Sicherungsring, insbesondere ein Sprengring, vorgesehen, welcher in eine Aufnahmenut 164, eingearbeitet in die zweite Gehäusekörperdichtfläche 134, eingreift und den Montagekörper 102 derart positioniert hält, dass die erste Montagekörperdichtfläche 112 an dem ersten Dichtelement 122 anliegt, allerdings ohne nennenswerte Druckbeaufschlagung desselben, wobei außerdem das erste Dichtelement 122 an der ersten Gehäusedichtfläche 114 anliegt.

Dadurch, dass die zweite Montagekörperdichtfläche 132 und die zweite Gehäusedichtfläche 134 mit dem zwischen diesen angeordneten zweiten Dichtelement 136 auf der in diesem Fall dem Innenraum 86 zugewandten Seite einen dichten Abschluss bildet, ist bereits bei geringer Druckkraft D oder gegebenenfalls sogar keiner oder negativer Druckkraft D immer noch sichergestellt, dass das im Innenraum 86 befindliche Medium nicht aus diesem im Bereich der elektrischen Durchführung 90 austreten kann und außerdem sichergestellt, dass bei ansteigender Druckkraft D sich die elektrische Durchführung 90, insbesondere der Montagekörper 102, parallel zur Führungsrichtung F bewegen können und somit die erste Montagekörperdichtfläche 112 und die erste Gehäusedichtfläche 114 das erste Dichtelement 122 mit steigender Druckkraft D beaufschlagen, um somit eine zuverlässige Abdichtung sicherzustellen.

Ferner ist beim zweiten Ausführungsbeispiel die elektrische Einheit 96' als Sensor oder Schaltelement, beispielsweise zum Verändern der Wicklungsverschaltung, ausgebildet.

Die elektrische Durchführung 90 ist insbesondere Teil einer elektrischen Verbindung 100 und wirkt, wie in Fig. 4 dargestellt, mit einem als Ganzes mit 170 bezeichneten Steckanschluss zusammen, welcher mit den Kontaktelementen 106 verbindbare Steckverbinderelemente 172 aufweist, die in einem Steckanschlussgehäuse 174 angeordnet sind und mit in das Steckanschlussgehäuse 174 geführten, zeichnerisch nicht dargestellten Anschlussleitungen verbunden sind.

Bei dem zweiten Ausführungsbeispiel wird das Steckanschlussgehäuse 174 beispielsweise mit Halteelementen 176 - im einfachsten Fall Schrauben - an dem Gehäuse 12', insbesondere dem Gehäusedeckel 162 fixiert, wobei das Steckanschlussgehäuse 174 vorzugsweise einen umlaufenden Flansch 178 aufweist, der an einer Außenseite 182 des Gehäuses 12' anlegbar ist, wobei zwischen dem Flansch 178 und der Außenseite 182 des Gehäuses 12' noch eine zusätzliche Abdichtung 184, vorzugsweise eine Flachdichtung oder eine Lippendichtung, vorgesehen ist.

Dabei verlaufen der Flansch 178 und die Abdichtung 184 radial außenliegend um den Durchlass 118'.

Vorzugsweise ist neben dem Durchlass 118' noch ein Erdungskontaktelement 192 vorgesehen und beispielsweise an dem Gehäuse 12' vorzugsweise an dem Gehäusedeckel 162, gehalten, insbesondere in eine Bohrung desselben eingesetzt, und ebenfalls durch ein Steckverbinderelement 194 des Steckanschlusses 170 kontaktiert.

Um beim Aufsetzen des Steckanschlusses 170 auf die Kontaktelemente 106 der elektrischen Durchführung 90 und das Erdungskontaktelement 192 zuerst einen Erdungskontakt zwischen dem Erdungskontaktelement 192 und dem entsprechenden Steckverbinderelement 194 herzustellen bevor ein elektrischer Anschluss zu den Kontaktelementen 106 hergestellt wird, ist vorzugsweise das Erdungskontaktelement 192 so ausgebildet, dass dieses über eine größere Distanz über die Außenseite des Gehäuses 12' übersteht als die Kontaktelemente 106.

Alternativ ist es aber auch denkbar, dass das Steckverbinderelement 194 zur Kontaktierung des Erdungskontaktelements 192 so auszubilden, dass dieses sich weiter in Richtung des jeweiligen Erdungskontaktelements 192 erstreckt als die übrigen Steckverbinderelemente 172, so dass dadurch ebenfalls beim Aufstecken des Steckanschlusses 170 zuerst ein Erdungskontakt sichergestellt ist, bevor die Kontaktelemente 106 durch die entsprechenden Steckverbinderelemente 172 kontaktiert werden.

Gleichzeitig hat ein derartig ausgebildeter Erdungskontakt den Vorteil, dass dieser eine eindeutige Ausrichtung des Steckanschlusses 170 relativ zu den Kontaktelementen 106 vorgibt, so dass dadurch eine eindeutige Verbindung zwischen dem jeweiligen Kontaktelement 106 und dem entsprechenden Steckverbinderelement 172 hergestellt und somit eine Fehlkontaktierung durch verdrehtes, beispielsweise um 180° verdrehtes Aufsetzen des Steckanschlusses 170 auf die elektrische Durchführung 90 verhindert wird.

Zusätzlich lässt sich auch durch eine geeignete Formgebung des Steckanschlussgehäuses 174, insbesondere des Flansches 178, beispielsweise durch eine Außenkontur 202' oder Innenkontur desselben, im Zusammenwirken mit einem an Gehäuse 12', insbesondere dem Gehäusedeckel 162, angeordneten Ausrichtelement 212 mit entsprechend geformten Konturen 214, die eindeutig bezüglich einer Drehung um die Führungsrichtung F ausgerichtete Position des Steckanschlussgehäuses 174 relativ zum Gehäuse 12' festlegen.

Im Übrigen sind bei dem zweiten Ausführungsbeispiel sämtliche Elemente, die mit dem ersten Ausführungsbeispiel identisch sind, mit denselben Bezugszeichen versehen, so dass hinsichtlich der Beschreibung derselben vollinhaltlich auf die Ausführungen zum ersten Ausführungsbeispiel Bezug genommen wird.

## Patentansprüche

1. Verdichter-/Expander-Maschine mit einem Gehäuse (12), in welchem eine Verdichter-/Expander-Einheit (14) für ein Medium angeordnet ist, welches in mindestens einem Innenraum (22, 86) des Gehäuses (12) geführt ist, und mit einer am Gehäuse (12) angeordneten elektrischen Verbindungseinheit (100), mindestens umfassend eine an dem Gehäuse (12) angeordnete, in den mindestens einen Innenraum (22, 86) führende elektrische Durchführung (90) zur Herstellung einer elektrischen Verbindung mit mindestens einer in dem Gehäuse (12) angeordneten elektrischen Einheit (74, 96), wobei die elektrische Durchführung (90) einen an dem Gehäuse (12) als separates Element montierten Montagekörper (102) sowie in diesem sitzende elektrische Kontaktelemente (106) aufweist, wobei der Montagekörper (102) eine um die elektrischen Kontaktelemente (106) geschlossen umlaufende, dem mindestens einen Innenraum (22, 86) abgewandte erste Montagekörperdichtfläche (112) aufweist, welche quer zu einer von dem in dem mindestens einen Innenraum (22, 86) unter Druck stehenden Medium auf die Durchführung (90) wirkenden Druckkraft (D) verläuft und welche mit einer dem mindestens einen Innenraum (22, 86) sowie dieser ersten Montagekörperdichtfläche (112) zugewandten ersten Gehäusedichtfläche (114) des Gehäuses (12) dichtend zusammenwirkt, wobei zwischen der ersten Montagekörperdichtfläche (112) und der ersten Gehäusedichtfläche (114) ein erstes Dichtelement (122) angeordnet ist, und wobei der Montagekörper (102) durch mindestens ein Halteelement (124) am Gehäuse (12) fixiert ist, welches den Montagekörper (102) so hält, dass die erste Montagekörperdichtfläche (112) relativ zur ersten Gehäusedichtfläche (114) in einer abdichtenden Stellung steht **dadurch gekennzeichnet, dass** der Montagekörper (102) eine zweite Montagekörperdichtfläche (132)
aufweist, welche um die Gesamtheit der elektrischen Kontaktelemente (106) geschlossen umlaufend und quer zur ersten Montagekörperdichtfläche (112) verläuft und dass das Gehäuse (12) eine zweite Gehäusedichtfläche (134) aufweist, die quer zur ersten Gehäusedichtfläche (114) verläuft und mit der zweiten Montagekörperdichtfläche (132) abdichtend zusammenwirkt, dass die zweite Montagekörperdichtfläche (132) und die zweite Gehäusedichtfläche (134) auf einer dem mindestens einen Innenraum (22, 86) zugewandten Seite der ersten Montagekörperdichtfläche (112) und der ersten Gehäusedichtfläche (114) zusammenwirkend angeordnet sind, und dass zwischen der zweiten Montagekörperdichtfläche (132) und der zweiten Gehäusedichtfläche (134) ein zweites Dichtelement (136), insbesondere ein Dichtring, angeordnet ist.

2. Verdichter-/Expander-Maschine nach Anspruch 1, **dadurch gekennzeichnet, dass** das mindestens eine Halteelement (124) eine Bewegung der ersten Montagekörperdichtfläche (112) in Richtung der ersten Gehäusedichtfläche (114) zulässt.

3. Verdichter-/Expander-Maschine nach Anspruch 1 oder 2, **dadurch gekennzeichnet, dass** die erste Montagekörperdichtfläche (112) an einem die elektrischen Kontaktelemente (106) umgebenden Flanschkörper (110) des Montagekörpers (102) angeordnet ist.

4. Verdichter-/Expander-Maschine nach einem der voranstehenden Ansprüche, **dadurch gekennzeichnet, dass** zwischen der ersten Montagekörperdichtfläche (112) und der ersten Gehäusedichtfläche (114) ein erstes Dichtelement (122) eingespannt ist, dass insbesondere sowohl die erste Montagekörperdichtfläche (112) als auch die erste Gehäusedichtfläche (114) jeweils an dem ersten Dichtelement (122) dichtend anliegen.

5. Verdichter-/Expander-Maschine nach einem der voranstehenden Ansprüche, **dadurch gekennzeichnet, dass** die zweite Montagekörperdichtfläche (132) und die zweite Gehäusedichtfläche (134) so ausgerichtet sind, dass der Montagekörper (102) mit der ersten Montagekörperdichtfläche (112) in Richtung der ersten Gehäusedichtfläche (114), insbesondere unter Beaufschlagung des ersten Dichtelements (122), bewegbar ist, dass insbesondere die erste Montagekörperdichtfläche (112) und die zweite Montagekörperdichtfläche (132) ungefähr quer, vorzugsweise senkrecht, zueinander verlaufen.

6. Verdichter-/Expander-Maschine nach einem der voranstehenden Ansprüche, **dadurch gekennzeichnet, dass** der Montagekörper (102) mit einer ersten Aufnahmefläche (152) versehen ist, welche mit einer zweiten, am Gehäuse (12) angeordneten Aufnahmefläche (154) zusammenwirkt, dass insbesondere die erste Aufnahmefläche (152) und die zweite Aufnahmefläche (154) so verlaufen, dass der Montagekörper (102) mit der ersten Montagekörperdichtfläche (112) in Richtung der ersten Gehäusedichtfläche (114), insbesondere unter Beaufschlagung des ersten Dichtelements (122), bewegbar ist und/oder dass insbesondere die erste und die zweite Aufnahmefläche (152, 154) quer zur ersten Montagekörperdichtfläche (112) und quer zur ersten Gehäusedichtfläche (114) verlaufen.

7. Verdichter-/Expander-Maschine nach Anspruch 6, **dadurch gekennzeichnet, dass** die erste Aufnahmefläche (152) und die zweite Aufnahmefläche (154) einen Formschluss bilden, welcher die elektrische Durchführung (90) relativ zum Gehäuse (12) drehfest fixiert.

8. Verdichter-/Expander-Maschine nach einem der Ansprüche 6 bis 7, **dadurch gekennzeichnet, dass** die erste Aufnahmefläche (152) und die zweite Aufnahmefläche (154) auf einer dem mindestens einen Innenraum (82, 86) abgewandten Seite der ersten Montagekörperdichtfläche (112) und der ersten Gehäusedichtfläche (114) angeordnet sind.

9. Verdichter-/Expander-Maschine nach einem der voranstehenden Ansprüche, **dadurch gekennzeichnet, dass** die elektrische Durchführung (90) an einem am Gehäuse (12) montierbaren Element (162) des Gehäuses (12), insbesondere an einem nach der elektrischen Maschine (74) montierbaren Element (162) des Gehäuses (12) angeordnet ist, dass insbesondere die elektrische Durchführung (90) an einem Element (162) des Gehäuses (12), insbesondere an einem der Verdichter-/Expandereinheit gegenüberliegend am Gehäuse (12) vorgesehenen Element, angeordnet ist, dass insbesondere das montierbare Element (162) an einem die elektrische Maschine (74) aufnehmendem Gehäuseabschnitt (72) angeordnet ist.

10. Verdichter-/Expander-Maschine nach einem der voranstehenden Ansprüche, **dadurch gekennzeichnet, dass** die elektrische Verbindungseinheit (100) einen mit der elektrischen Durchführung (90) verbindbaren oder verbundenen Steckanschluss (170) aufweist, dass insbesondere der Steckanschluss (170) mit den Kontaktelementen (106) der elektrischen Durchführung (90) verbindbare Steckverbinderelemente (172) aufweist und/oder dass insbesondere der Steckanschluss (170) ein Erdungssteckverbinderelement (194) aufweist, welches mit einem gehäuseseitigen Erdungskontaktelement (192) verbindbar oder verbunden ist, dass insbesondere das gehäuseseitige Erdungskontaktelement (192) neben der elektrischen Durchführung (90) am Gehäuse (12) angeordnet ist.

11. Verdichter-/Expander-Maschine nach Anspruch 10, **dadurch gekennzeichnet, dass** der Steckanschluss (170) ein Steckanschlussgehäuse (174) aufweist, welches mit dem Gehäuse (12) verbindbar oder verbunden ist, dass insbesondere zwischen dem Steckanschlussgehäuse (174) und dem Gehäuse (12) eine Abdichtung (184) vorgesehen ist und/oder dass insbesondere das Steckanschlussgehäuse (174) mindestens eine erste Formschlussfläche (202) aufweist, welche zur Positionierung des Steckanschlussgehäuses (174) relativ zum Gehäuse (12) mit einer zweiten, am Gehäuse angeordneten Formschlussfläche (214) zusammenwirkt, dass insbesondere die erste Formschlussfläche (202) und die zweite Formschlussfläche (214) eine verdrehfeste Formschlussverbindung bewirken.

12. Verdichter-/Expander-Maschine nach einem der voranstehenden Ansprüche, **dadurch gekennzeichnet, dass** in dem Gehäuse (12) eine mit der Verdichter-Expander-Einheit (14) mechanisch gekoppelte elektrische Maschine (74) als elektrische Einheit angeordnet ist.

13. Verdichter-/Expander-Maschine nach einem der voranstehenden Ansprüche, **dadurch gekennzeichnet, dass** in dem Gehäuse (12) mindestens ein elektrischer Sensor (96) als elektrische Einheit angeordnet ist.

## Claims

1. A compressor/expander machine having a housing (12) in which there is arranged a compressor/expander unit (14) for a medium that is guided in at least one inner space (22, 86) of the housing (12), and having an electrical connecting unit (100) that is arranged on the housing (12), comprising at least one electrical lead-through (90) that is arranged on the housing (12) and leads into at least one inner space (22, 86) for establishing an electrical connection to at least one electrical unit (74, 96) that is arranged in the housing (12), wherein the electrical lead-through (90) comprises a mounting body (102) that is mounted on the housing (12) as a separate element as well as electrical contact elements (106) that are seated therein, wherein the mounting body (102) comprises a first mounting body sealing surface (112) which is remote from the at least one inner space (22, 86) and surrounds the electrical contact elements (106) in closed manner and which runs transverse to a compressive force (D) that acts on the lead-through (90) due to the medium under pressure in the at least one inner space (22, 86) and which cooperates in sealing manner with a first housing sealing surface (114) of the housing (12) that faces the at least one inner space (22, 86) as well as this first mounting body sealing surface (112), wherein a first sealing element (122) is arranged between the first mounting body sealing surface (112) and the first housing sealing surface (114), and wherein the mounting body (102) is fixed to the housing (12) by at least one holding element (124), which holds the mounting body (102) in such a way that the first mounting body sealing surface (112) is located in a sealing disposition relative to the first housing sealing surface (114) **characterised in that** the mounting body (102) comprises a second mounting body sealing surface (132), which surrounds the whole of the electrical contact elements (106) in closed manner and runs transverse to the first mounting body sealing surface (112) and **in that** the housing (12) comprises a second housing sealing surface (134) which runs transverse to the first housing sealing surface (114) and cooperates with the second mounting body sealing surface (132) in sealing manner, **in that** the second mounting body sealing surface (132) and the second housing sealing surface (134) are arranged in cooperating manner on a side of the first mounting body sealing surface (112) and the first housing sealing surface (114) that faces the at least one inner space (22, 86), and **in that** a second sealing element (136), in particular a sealing ring, is arranged between the second mounting body sealing surface (132) and the second housing sealing surface (134).

2. A compressor/expander machine in accordance with Claim 1, **characterized in that** the at least one holding element (124) permits a movement of the first mounting body sealing surface (112) in the direction of the first housing sealing surface (114).

3. A compressor/expander machine in accordance with Claim 1 or 2, **characterized in that** the first mounting body sealing surface (112) is arranged on a flange body (110) of the mounting body (102) surrounding the electrical contact elements (106).

4. A compressor/expander machine in accordance with any of the preceding Claims, **characterized in that** a first sealing element (122) is clamped between the first mounting body sealing surface (112) and the first housing sealing surface (114), **in that** in particular both the first mounting body sealing surface (112) and the first housing sealing surface (114) each abut on the first sealing element (122) in sealing manner.

5. A compressor/expander machine in accordance with any of the preceding Claims, **characterized in that** the second mounting body sealing surface (132) and the second housing sealing surface (134) are oriented in such a way that the first mounting body sealing surface (112) of the mounting body (102) is movable in the direction of the first housing sealing surface (114), in particular with impingement of the first sealing element (122), **in that** in particular the first mounting body sealing surface (112) and the second mounting body sealing surface (132) run approximately transversely, preferably perpendicularly, relative to each other.

6. A compressor/expander machine in accordance with any of the preceding Claims, **characterized in that** the mounting body (102) is provided with a first receiving surface (152) which cooperates with a second receiving surface (154) that is arranged on the housing (12), **in that** in particular the first receiving surface (152) and the second receiving surface (154) run in such a way that the first mounting body sealing surface (112) of the mounting body (102) is movable in the direction of the first housing sealing surface (114), in particular with impingement of the first sealing element (122), and/or **in that** in particular the first and the second receiving surface (152, 154) run transverse to the first mounting body sealing surface (112) and transverse to the first housing sealing surface (114).

7. A compressor/expander machine in accordance with Claim 6, **characterized in that** the first receiving surface (152) and the second receiving surface (154) form a positive-locking arrangement which fixes the electrical lead-through (90) relative to the housing (12) in mutually non-rotatable manner.

8. A compressor/expander machine in accordance with either of Claims 6 or 7, **characterized in that** the first receiving surface (152) and the second receiving surface (154) are arranged on a side of the first mounting body sealing surface (112) and the first housing sealing surface (114) that is remote from the at least one inner space (82, 86).

9. A compressor/expander machine in accordance with any of the preceding Claims, **characterized in that** the electrical lead-through (90) is arranged on an element (162) of the housing (12) that is mountable on the housing (12), in particular an element (162) of the housing (12) that is mountable after the electrical machine (74), **in that** in particular the electrical lead-through (90) is arranged on an element (162) of the housing (12), in particular on an element that is provided on the housing (12) opposite the compressor/expander unit, **in that** in particular the mountable element (162) is arranged on a housing section (72) accommodating the electrical machine (74).

10. A compressor/expander machine in accordance with any of the preceding Claims, **characterized in that** the electrical connecting unit (100) comprises a plug connector (170) that is connectable or connected to the electrical lead-through (90), **in that** in particular the plug connector (170) comprises plug connector elements (172) that are connectable to the contact elements (106) of the electrical lead-through (90) and/or **in that** in particular the plug connector (170) comprises an earthing plug connector element (194) which is connectable or connected to a housing-side earthing contact element (192), **in that** in particular the housing-side earthing contact element (192) is arranged on the housing (12) near the electrical lead-through (90).

11. A compressor/expander machine in accordance with Claim 10, **characterized in that** the plug connector (170) comprises a plug connector housing (174) which is connectable or connected to the housing (12), **in that** in particular a seal (184) is provided between the plug connector housing (174) and the housing (12) and/or **in that** in particular the plug connector housing (174) comprises at least one first positively-locking surface (202) which cooperates with a second positively-locking surface (214) arranged on the housing for the purposes of positioning the plug connector housing (174) relative to the housing (12), **in that** in particular the first positively-locking surface (202) and the second positively-locking surface (214) create a mutually non-twistable positively-locking connection.

12. A compressor/expander machine in accordance with any of the preceding Claims, **characterized in that** an electrical machine (74) that is mechanically coupled to the compressor expander unit (14) is arranged in the housing (12) as an electrical unit.

13. A compressor/expander machine in accordance with any of the preceding Claims, **characterized in that** at least one electrical sensor (96) is arranged in the housing (12) as an electrical unit.

## Revendications

1. Machine de compression/détente avec un carter (12), dans lequel est disposée une unité de compression/détente (14) pour un milieu, lequel est guidé dans au moins un espace intérieur (22, 86) du carter (12), et avec une unité de liaison électrique (100) disposée sur le carter (12), comprenant au moins une traversée (90) électrique disposée sur le carter (12), menant dans l'au moins un espace intérieur (22, 86) pour l'établissement d'une liaison électrique avec au moins une unité électrique (74, 96) disposée dans le carter (12), dans laquelle la traversée (90) électrique présente un corps de montage (102) monté sur le carter (12) en tant qu'élément séparé ainsi que des éléments de contact électriques (106) reposant dans celui-ci, dans laquelle le corps de montage (102) présente une première surface d'étanchéité de corps de montage (112) faisant le tour de façon fermée des éléments de contact électriques (106), opposée à l'au moins un espace intérieur (22, 86), laquelle s'étend transversalement par rapport à une force de pression (D) agissant à partir du milieu sous pression dans l'au moins un espace intérieur (22, 86) sur la traversée (90) et laquelle coopère de manière étanche avec une première surface d'étanchéité de carter (114) du carter (12) tournée vers l'au moins un espace intérieur (22, 86) ainsi que cette première surface d'étanchéité de corps de montage (112), dans laquelle un premier élément d'étanchéité (122) est disposé entre la première surface d'étanchéité de corps de montage (112) et la première surface d'étanchéité de carter (114), et dans laquelle le corps de montage (102) est fixé par au moins un élément de retenue (124) sur le carter (12), lequel retient le corps de montage (102) de sorte que la première surface d'étanchéité de corps de montage (112) se tient dans une position d'étanchéité par rapport à la première surface d'étanchéité de carter (114), **caractérisée en ce que** le corps de montage (102) présente une deuxième surface d'étanchéité de corps de montage (132), laquelle s'étend de manière à faire le tour de façon fermée de la totalité des éléments de contact électriques (106) et transversalement par rapport à la première surface d'étanchéité de corps de montage (112) et que le carter (12) présente une deuxième surface d'étanchéité de carter (134), qui s'étend transversalement par rapport à la première surface d'étanchéité de carter (114) et coopère de manière étanche avec la deuxième surface d'étanchéité de corps de montage (132), que la deuxième surface d'étanchéité de corps de montage (132) et la deuxième surface d'étanchéité de carter (134) sont disposées sur une face de la première surface d'étanchéité de corps de montage (112) et de la première surface d'étanchéité de carter (114) tournée vers l'au moins un espace intérieur (22, 86) de manière à coopérer, et qu'un deuxième élément d'étanchéité (136), en particulier une bague d'étanchéité, est disposé entre la deuxième surface d'étanchéité de corps de montage (132) et la deuxième surface d'étanchéité de carter (134).

2. Machine de compression/détente selon la revendication 1, **caractérisée en ce que** l'au moins un élément de retenue (124) admet un mouvement de la première surface d'étanchéité de corps de montage (112) en direction de la première surface d'étanchéité de carter (114).

3. Machine de compression/détente selon la revendication 1 ou 2, **caractérisée en ce que** la première surface d'étanchéité de corps de montage (112) est disposée sur un corps de bride (110) du corps de montage (102) entourant les éléments de contact électriques (106) .

4. Machine de compression/détente selon l'une quelconque des revendications précédentes, **caractérisée en ce qu'**un premier élément d'étanchéité (122) est serré entre la première surface d'étanchéité de corps de montage (112) et la première surface d'étanchéité de carter (114), qu'en particulier aussi bien la première surface d'étanchéité de corps de montage (112) que la première surface d'étanchéité de carter (114) s'appliquent de manière étanche respectivement sur le premier élément d'étanchéité (122).

5. Machine de compression/détente selon l'une quelconque des revendications précédentes, **caractérisée en ce que** la deuxième surface d'étanchéité de corps de montage (132) et la deuxième surface d'étanchéité de carter (134) sont orientées de sorte que le corps de montage (102) avec la première surface d'étanchéité de corps de montage (112) est mobile en direction de la première surface d'étanchéité de carter (114), en particulier avec sollicitation du premier élément d'étanchéité (122), qu'en particulier la première surface d'étanchéité de corps de montage (112) et la deuxième surface d'étanchéité de corps de montage (132) s'étendent à peu près transversalement, de préférence perpendiculairement, l'une par rapport à l'autre.

6. Machine de compression/détente selon l'une quelconque des revendications précédentes, **caractérisée en ce que** le corps de montage (102) est pourvu d'une première surface de réception (152), laquelle coopère avec une deuxième surface de réception (154) disposée sur le carter (12), qu'en particulier la première surface de réception (152) et la deuxième surface de réception (154) s'étendent de sorte que le corps de montage (102) est mobile avec la première surface d'étanchéité de corps de montage (112) en direction de la première surface d'étanchéité de carter (114), en particulier avec sollicitation du premier élément d'étanchéité (122), et/ou qu'en particulier la première et la deuxième surface de réception (152, 154) s'étendent transversalement par rapport à la première surface d'étanchéité de corps de montage (112) et transversalement par rapport à la première surface d'étanchéité de carter (114).

7. Machine de compression/détente selon la revendication 6, **caractérisée en ce que** la première surface de réception (152) et la deuxième surface de réception (154) forment une complémentarité de formes, laquelle fixe la traversée (90) électrique de manière solidaire en rotation par rapport au carter (12).

8. Machine de compression/détente selon l'une quelconque des revendications 6 à 7, **caractérisée en ce que** la première surface de réception (152) et la deuxième surface de réception (154) sont disposées sur une face de la première surface d'étanchéité de corps de montage (112) et de la première surface d'étanchéité de carter (114) opposée à l'au moins un espace intérieur (82, 86).

9. Machine de compression/détente selon l'une quelconque des revendications précédentes, **caractérisée en ce que** la traversée (90) électrique est disposée sur un élément (162) du carter (12) pouvant être monté sur le carter (12), en particulier sur un élément (162) du carter (12) pouvant être monté après la machine électrique (74), qu'en particulier la traversée (90) électrique est disposée sur un élément (162) du carter (12), en particulier sur un élément prévu sur le carter (12) à l'opposé de l'unité de compression/détente, qu'en particulier l'élément (162) pouvant être monté est disposé sur une partie de carter (72) recevant la machine électrique (74).

10. Machine de compression/détente selon l'une quelconque des revendications précédentes, **caractérisée en ce que** l'unité de liaison électrique (100) présente un raccord enfichable (170) pouvant être connecté ou connecté à la traversée (90) électrique, qu'en particulier le raccord enfichable (170) présente des éléments de connexion à fiche (172) pouvant être connectés aux éléments de contact (106) de la traversée (90) électrique et/ou qu'en particulier le raccord enfichable (170) présente un élément de connexion à fiche de mise à la terre (194), lequel peut être connecté ou est connecté à un élément de contact de mise à la terre (192) côté carter, qu'en particulier l'élément de contact de mise à la terre (192) côté carter est disposé à côté de la traversée (90) électrique sur le carter (12) .

11. Machine de compression/détente selon la revendication 10, **caractérisée en ce que** le raccord enfichable (170) présente un boîtier de raccord enfichable (174), lequel peut être connecté ou est connecté au carter (12), qu'en particulier un joint d'étanchéité (184) est prévu entre le boîtier de raccord enfichable (174) et le carter (12) et/ou qu'en particulier le boîtier de raccord enfichable (174) présente au moins une première surface de complémentarité de formes (202), laquelle pour le positionnement du boîtier de raccord enfichable (174) par rapport au carter (12) coopère avec une deuxième surface de complémentarité de formes (214) disposée sur le carter, qu'en particulier la première surface de complémentarité de formes (202) et la deuxième surface de complémentarité de formes (214) entraînent une liaison par complémentarité de formes solidaire en rotation.

12. Machine de compression/détente selon l'une quelconque des revendications précédentes, **caractérisée en ce qu'**une machine électrique (74) couplée mécaniquement à l'unité de compression/détente (14) en tant qu'unité électrique est disposée dans le carter (12) .

13. Machine de compression/détente selon l'une quelconque des revendications précédentes, **caractérisée en ce qu'**au moins un capteur électrique (96) en tant qu'unité électrique est disposé dans le carter (12).
